(19)

**Europäisches Patentamt**
**European Patent Office**
**Office européen des brevets**

(11) **EP 4 270 120 A1**

(12) **EUROPEAN PATENT APPLICATION**

(43) Date of publication:
01.11.2023 Bulletin 2023/44

(21) Application number: 23169680.8

(22) Date of filing: 25.04.2023

(51) International Patent Classification (IPC):
*G05B 17/02* (2006.01) *G05B 19/418* (2006.01)
*G05B 13/04* (2006.01)

(52) Cooperative Patent Classification (CPC):
**G05B 17/02; G05B 13/04; G05B 19/41885**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 25.04.2022 EP 22169657

(71) Applicant: **Merck Patent GmbH**
**64293 Darmstadt (DE)**

(72) Inventors:
• **Kurt, Safa Kutup**
**64293 DARMSTADT (DE)**
• **Bordas, Balazs**
**64293 DARMSTADT (DE)**
• **Ravali Theeda, Uma Jaya**
**64293 DARMSTADT (DE)**
• **Bamberg, Andreas**
**64293 DARMSTADT (DE)**

(54) **EMBEDDED MODEL-BASED DIGITAL TWIN WORKFLOW FOR THE ACCELERATED OPTIMIZATION OF BIO-/ CHEMICAL PROCESSES**

(57) A method to improve bio-/chemical and/or pharmaceutical production units in a production plant controlled by at least one computer the following steps of Determining a grey-box model configuration wherein a data-based machine learning model component describes a function which is independent of the production plant equipment scale and wherein the data-based machine learning model component is embedded into a system of ordinary differential equations or differential-algebraic equations which express the component mass and energy balances of the modeled process; Setting up the grey-box model via a software running on the at least one computer including the machine learning model component and a physical model component with the determined configuration and the dimensions of the required production scale of the production unit, and training its machine learning model component using available production history data; Setting up a downscaled laboratory version of the production unit operation, and scale the set up grey-box model to match it via its physical parameters; Perform experiments to generate representative data for extending the validity of the machine learning component of the grey-box model therefore improving it; Identifying at least one new operating window for the production unit using the improved grey-box model and numerical optimization techniques and validating the model-based control strategy with it; and Scaling up the grey-box model and the control strategy to the required production scale and performing validation runs, comprising. The core of the invention is a workflow to accelerate the optimization of existing production units and the scale-up of new processes by using a specific configuration for grey-box models that enables straightforward scaling, and representative data generation with laboratory equipment.

EP 4 270 120 A1

## Description

The hereby described invention discloses a method to improve bio-/chemical and/or pharmaceutical production units in a production plant using a grey-box model.

## Technical Field

The invention deals with the technological area of digital twin supported bio-/chemical production processes.

## Background and description of the prior art

Digital twin technology is one of the key concepts in the digital transformation roadmap of chemical and biochemical production plants. The main goals of developing a digital twin are increasing the transparency of the process and improving the consistency of product quality. This is achieved by enabling online communication between the plant sensors and actuators and a mathematical model of the process. The online connection with a process model can be used in different ways. The two main applications are soft sensing, where unmeasurable properties of the process are calculated from the measured data, and model predictive control, which can mitigate batch-to-batch variation by means of real-time process optimization.

One of the main practical issues with the application of digital twin technology is the high level of expertise and the time investment associated with the modeling of production processes that exhibit complex physio-chemical phenomena. Grey-box modeling, also known as hybrid modeling, aims to decrease these factors by combining the reliability of knowledge-based physical models with the flexibility of machine learning models trained with data. This is particularly useful in the specialty chemical industry, where material properties and reaction kinetics are rarely available from databases, hindering the development of a physical model.

In order to obtain reliable models for the optimization of complex chemical and bioprocesses with a reasonable time and cost investment, the use of grey-box models is clearly advantageous. Grey-box models generally need less data than fully data-based process models to achieve the same level of reliability, since the model to be trained already includes hard-coded knowledge about the expected behavior of the system. However, the data used for grey-box model development should still be representative, especially if the model is intended to be used for model predictive control.

The data stored in production historians are not representative, because production processes follow a predetermined set of instructions, known as the recipe. As a result, such data are heavily biased towards the narrow operating window defined by the recipe. The generation of representative data in production is rarely an economically feasible option as it generates a high amount of material that may not be possible to sell. A more economical alternative is to generate this data using lab-scale equipment, but the scaling of machine learning-based models from lab to production is not generally solved.

This scaling problem can also be related to new process development where a process model could often accelerate the scale-up from lab to production. The highly competitive specialty chemicals market often does not allow enough time to build a rigorous physical model for novel products and processes, while machine learning-based models are difficult to scale up.

## Summary of the invention

The task of this patent application is therefore to provide an improved digital twin approach to operate chemical and biochemical production plants which is more efficient and less complex than the respective approaches from the state of the art.

This task has been solved by a method to improve bio-/chemical and/or pharmaceutical production units in a production plant controlled by at least one computer the following steps of Determining a grey-box model configuration wherein a data-based machine learning model component describes a function which is independent of the production plant equipment scale and wherein the data-based machine learning model component is embedded into a system of ordinary differential equations or differential-algebraic equations which express the component mass and energy balances of the modeled process; Setting up the grey-box model via a software running on the at least one computer including the machine learning model component and a physical model component with the determined configuration and the dimensions of the required production scale of the production unit, and training its machine learning model component using available production history data; Setting up a downscaled laboratory version of the production unit operation, and scale the set up grey-box model to match it via its physical parameters; Perform experiments to generate representative data for extending the validity of the machine learning component of the grey-box model therefore improving it; Identifying at least one new operating window for the production unit using the improved grey-box model and numerical optimization techniques and validating the model-based control strategy with it; and Scaling up the grey-box model and the control strategy to the required production scale and performing validation runs, comprising. The core of the invention is a workflow to accelerate the optimization of existing production units and the scale-up of new processes by using a specific configuration for grey-box models that enables straightforward scaling, and representative data generation with laboratory equipment. Furthermore the component mass and energy balances often include terms that describe molecular-level interactions, such as reaction kinetics or thermodynamic equilibria. When processes like these are represented by a data-based model, the overall grey-box model remains scalable via its dimensional parameters. Coincidentally, the main difficulty in developing complete physical models of chemical and bioprocesses is usually the determination of these specific terms.

Advantageous and therefore preferred further developments of this invention emerge from the associated subclaims and from the description and the associated drawings.

One of those preferred further developments of the disclosed [method] comprise that for the model-based creation and optimization of new production processes, method steps 2 and 3 are combined so that the setting up of the grey-box model with the determined configuration is performed with the dimensions of laboratory-scale equipment, and the grey-box model is then trained by using any available data from previous trial experiments. In the invented workflow for modeling and optimization of new processes, steps 2 and 3 are combined into one step as described above. The following steps 4 and 5 as well as the first step remain the same as for workflows for modeling and optimization of existing processes.

Another one of those preferred further developments of the disclosed method comprise that the improvement of the chemical and/or biochemical production units is used to improve reactions of existing but obscure or completely new products, wherein lacking information regarding the kinetics of those reactions are provided via the grey-box model by calculating with the data-based machine learning model component reaction rates as a function of temperature, reactant concentrations and other factors. Such reactions usually do not have any information available regarding its kinetics, since the detailed characterization of complex reaction systems can be extremely time consuming and resource intensive. The modeling of reactors is highly desired to enable more consistent product quality via model-based process control. According to the proposed configuration for grey-box modeling, the expressions that calculate reaction rates as a function of temperature, reactant concentrations and possibly other factors should be represented by a data-based model and trained using measurement data.

Another one of those preferred further developments of the disclosed method comprise that the improved reaction is the modeling of polymerization reactions, wherein the possibly infinite number of unique species require the use of population balance equations in a grey-box formulation. This is an especially challenging case because the possibly infinite number of unique species require the use of population balance equations in a grey-box formulation.

Another one of those preferred further developments of the disclosed method comprise that the improvement of the chemical and/or biochemical production units is used to optimize a rectification process in form of a multi-stage distillation by calculating the required vapor-liquid equilibrium information by using a physical thermodynamical model component instead of the data-based machine learning model component. Depending on the system at hand, the entire thermodynamical model or only a part of it may be substituted with a data-based model. The same principle can be applied to other multi-phase separation processes such as extraction or crystallization.

Another one of those preferred further developments of the disclosed method comprise that to approximate nonlinear functions with varying complexity, an artificial neural network is used for the data-based machine learning model component. Which type or kind of artificial neural network is used depends on the specific use case.

Another one of those preferred further developments of the disclosed method comprise that for training and simulating the grey-box models, which embed an artificial neural network into a system of ordinary differential equations, PyTorch and Tensorflow packages, provided in Python and any other programming language, are used, wherein to achieve the same when the physical model is differential-algebraic, CasADi package is used as the most suitable framework. The packages are hereby defined as SW libraries which provide the required function(s) and are prepared in a suitable package including necessary APIs so they can be used to apply those function(s).

Another one of those preferred further developments of the disclosed method comprise that the physical and data-based model components are implemented within the same framework. This supports a seamless integration of both components in the grey-box model and is therefore the most preferred albeit not the only way of providing those components.

Another one of those preferred further developments of the disclosed method comprise that both statistical design of experiments and model-based design methods to produce dynamic experiments with time-varying inputs are used to generate representative data for extending the validity of the machine learning component, resulting in training data with a much higher information density. Since the present invention concerns itself with partially machine learning-based models, active learning approaches are expected to be more effective than conventional optimal design of experiments due to highly correlated model parameters.

A further solution to the provided task is a system to perform chemical and/or biochemical production processes in a production plant comprising of the following components of all existing hardware plant equipment, a plant process control systems, a grey-box model comprising a data-based machine learning model component and/or a physical model component performed by a software, a database, at least one computer to operate the software, the database and the plant process control systems, wherein all system components are connected via a closed network structure and the system is configured to perform the previously disclosed method.

Another solution to the provided task is a computer program product comprising instructions, which when executed on one or more processors of a system performs chemical and/or biochemical production processes in a production plant and causes the system to perform the method steps of the previously disclosed method.

A further solution to the provided task is a non-transitory computer-readable medium having stored thereon computer-executable instructions which, when executed on one or more processors of the previously described system, causes the system to perform the method steps of the disclosed method.

**Detailed description of the invention**

The method, system and stored/executed computer program product according to the invention and functionally advantageous developments of those are described in more detail below with reference to the associated drawings using at least one preferred exemplary embodiment. In the drawings, elements that correspond to one another are provided with the same reference numerals.

The drawings show:

Figure 1:       an illustration of the method workflow
Figure 2:       the hardware components of an exemplary used system
Figure 3:       an exemplary correction of reboiler temperatures by using predictions of the grey-box model
Figure 4:       the CasADi model used for estimating the correction factors
Figure 5:       the results of the prediction of the reboiler temperature and other measured states
Figure 6:       laboratory setup for scaling down the distillation process to laboratory environment
Figure 7:       illustration of the active learning-based design of experiments workflow
Figure 8:       optimal input trajectories generated by the active learning algorithm
Figure 9:       model predictions before (green color) and after (orange color) training on the data generated with the optimal input trajectories
Figure 10:     improvement of the reboiler temperature prediction accuracy throughout the active learning iterations
Figure 11:     improvement of the process performance in terms of space-time yield using the model predictive controller

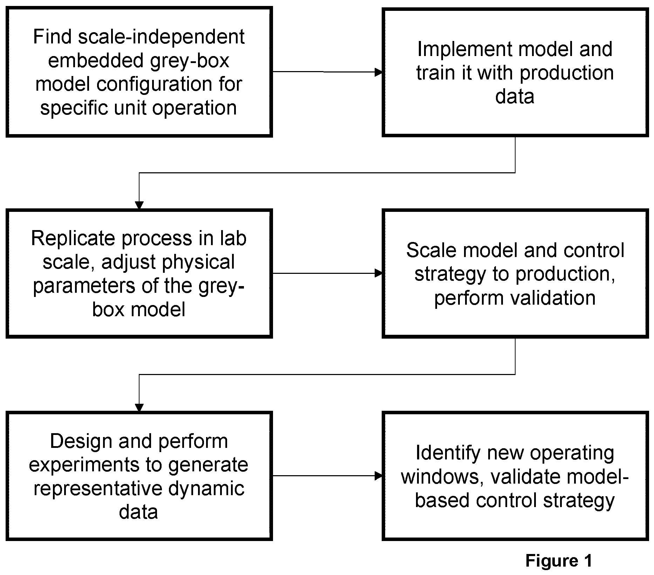

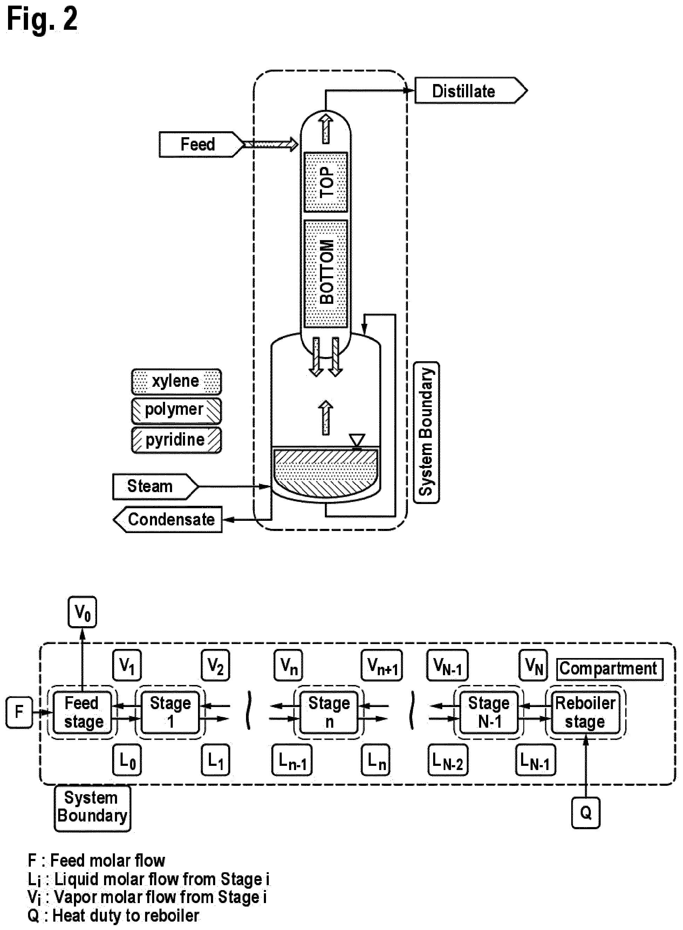

The preferred exemplary embodiment as shown with its workflow in Figure 1 uses grey-box modeling and provides an optimal control of an existing production-scale batch distillation column using the workflow described in the following. Figure 2 shows the respective relevant system parts of the plant equipment for the preferred embodiment. The column is operated to replace a higher boiling solvent with a lower boiling solvent in mixture with a polymer. Due to heat sensitivity of the polymer, the distillation takes place under vacuum. A stainless steel structured packing is used for vapor-liquid contacting. The unknown element in the system to be modeled is the polymer influence on the vapor-liquid equilibrium. This effect is to be approximated using a data-based model, trained on available sensor time series data. The model is operated on a suitable computer, preferable a standard personal computer with enough memory and processing speed which has access to the sensor time series data, usually via a respective memory/database, and the model is integrated in a software which is performed by the computer. The computer can be located in the surveyed plant, but can also operate remotely as long as a secured data connection, e.g. via a local network or internet (WAN) with or without VPN or similar, exists. The then resulting grey-box model is expected to be fully scalable via its dimensional parameters.

First, a mechanistic model was developed for the batch distillation without polymer influences using the following MESH balance equations. The resulting system of differential-algebraic equations were implemented using the Python API of the CasADi open-source library.

**Mass, Enthalpy Balance:**

**nth stage -**

$$\frac{dM_n}{dt} = V_{n+1} + L_{n-1} - V_n - L_n$$

$$\frac{d(x_n M_n)}{dt} = y_{n+1}V_{n+1} + x_{n-1}L_{n-1} - y_n V_n - x_n L_n$$

$$\frac{d(h_n M_n)}{dt} = H_{n+1}V_{n+1} + h_{n-1}L_{n-1} - H_n V_n - h_n L_n$$

**Reboiler stage:**

$$\frac{dM_N}{dt} = L_{N-1} - V_N$$

$$\frac{d(x_N M_N)}{dt} = x_{N-1}L_{N-1} - y_N V_N$$

$$\frac{d(h_N M_N)}{dt} = h_{N-1}L_{N-1} - H_N V_N + Q$$

where:

xi and yi is the liquid and vapor composition at the ith stage respectively,
Mi is the liquid molar hold-up in the ith stage,
Li and Vi are the outgoing liquid and vapor mole flowrates from the ith stage
hi and Hi is the liquid and vapor enthalpy of ith stage.

**Thermodynamic equilibrium:**

$$y_i = K x_i$$

where K is the equilibrium constant defined by a thermodynamic model

**Liquid and Vapor enthalpies:**

$$h_i^k = \sum_{k=1}^{N_c=2} x_i^k C_{pi}^k (T_i - T_f)$$

$$H_i^k = \sum_{k=1}^{N_c=2} y_i^k C_{pi}^k (T_i - T_f) + \Delta H_{vap}^k$$

where:

$C^k_{pi}$ is the liquid specific heat capacity of the $k^{th}$ component with composition as in the $i^{th}$ stage,
$Ti$ is the $i^{th}$ stage temperature,
$Tf$ is the reference temperature,
$H^kvap$ is the heat vaporization of $k^{th}$ component

**Number of Theoretical stages:**

$$\text{Height } = \text{ Packing length } \times \text{ Number of actual stages}$$

$$\text{Number of theoretical stages} = \frac{Height}{HETP}$$

**Liquid Stage Hold-up:**

$$\varsigma_{tot} = \varsigma_{stat} + \varsigma_{dyn}$$

$$\varsigma_{stat} = 0.033\exp\left(-0.22\frac{g\rho_L}{\sigma_L a_{geo}^2}\right)$$

$$\varsigma_{dyn} = \varsigma_{dyn0}\left[1 + 36\left(\frac{\frac{\Delta P_{tot}}{L}}{g\rho_L}\right)^2\right]$$

$$\varsigma_{dyn0} = 3.6\left(\frac{u_L a_{geo}^{0.5}}{g^{0.5}}\right)^{0.65}\left(\frac{\eta_L a_{geo}^{1.5}}{\rho_L g^{0.5}}\right)^{0.25}\left(\frac{\sigma a_{geo}^2}{g\rho_L}\right)^{0.1}$$

Where:

$\varsigma_{tot}$, $\varsigma_{stat}$ and $\varsigma_{dyn}$ denote the total, static and dynamic liquid holdup,
$\rho_L$ is the liquid density,
$\sigma_L$ is the surface tension,
$a^2_{geo}$ is the specific surface area of the packing,
$\eta_L$ is the liquid viscosity.

**Constraints:**

$$P_k = P_k^{\circ} x_i \gamma_i (T_i)$$

$$\sum_{k=1}^{2} P_k = P_{total}$$

where, Pok is pure kth component vapor pressure, xi is mole fraction and $\gamma$k is the activity coefficient at ith stage as modelled using thermodynamic model

The polymer influence is introduced by considering a correction factor into the partial pressure estimates to one of the components assumed in the mechanistic model. Here, the higher boiling solvent is chosen as it is the solvent that primarily interacts with the polymer, whereas the interaction with the low boiler solvent is assumed negligible.

**Polymer Influence:**

$$P_k = \xi(x_i)P_k^{\circ}x_i\gamma_k$$

where, $\xi$ is the correction factor

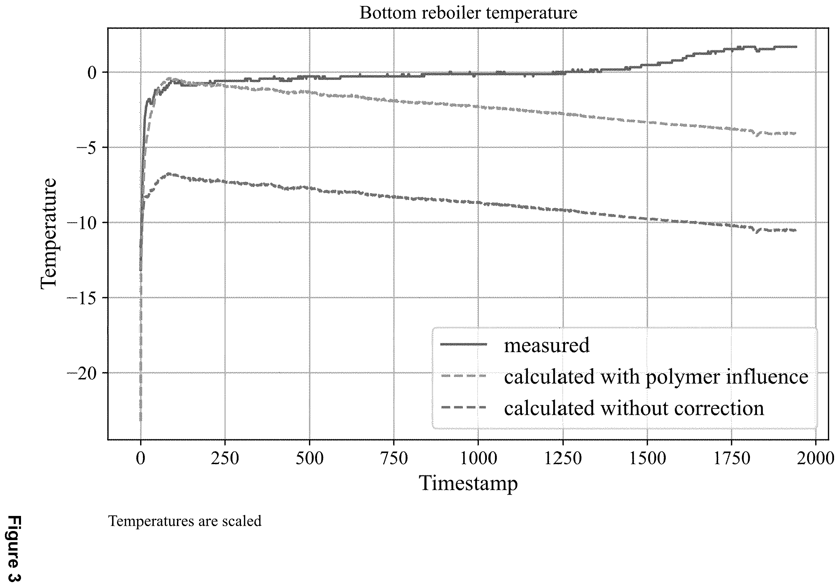

By definition, the correction factor must be in the range of (0, 1). When $\xi$ = 1, the polymer influence is absent and with decreasing $\xi$, the polymer influence increases. This addition was found to improve the reboiler temperatures predictions of the model. Figure 3 shows the corrected reboiler temperatures with $\xi$ = 0.82, which was estimated by trial and error, for a batch run. In this figure, it can be observed that a constant $\xi$ value does not sufficiently describe the column behavior due to polymer accumulation in the reboiler vessel with time. Thus, the concentration of polymer also changes with time. Therefore, to capture the increase in temperature dynamics, the proposed $\xi$ factor should also be dependent on relevant system states, primarily the accumulating polymer concentration.

Below is the minimization routine to estimate these correction factors independently at each timestep. The CasADi model was simulated using a differential-algebraic equation solver IDAS from the SUNDIALS solver suite.

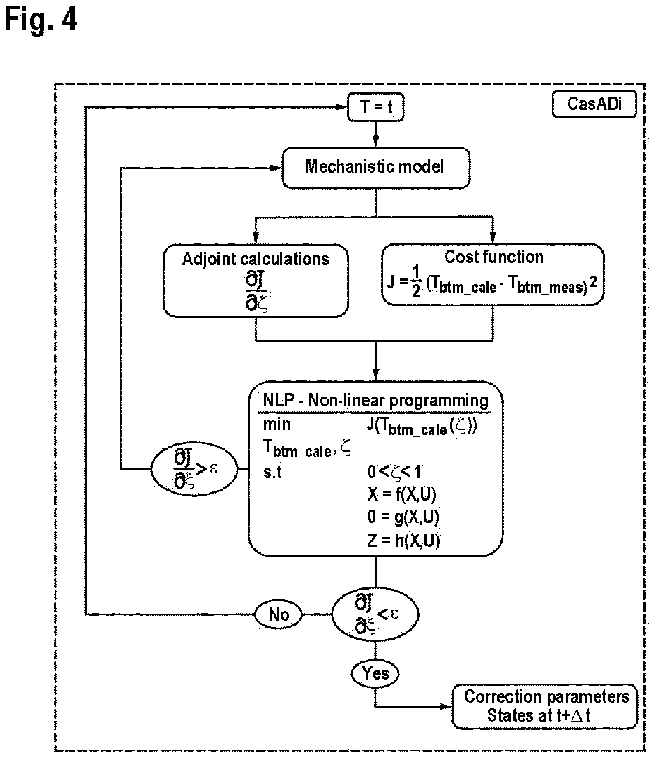

The minimization was solved numerically with the IPOPT interior point optimizer. Figure 4 explains the respective conclusions, while the required equations are shown below:

**Minimization for $\xi$ - polymer correction factor:**

$$J = \frac{1}{2}\left(T_{btm\_calc} - T_{btm\_meas}\right)^2$$

$$\min_{T_{btmcalc},\zeta} J\left(T_{btmcalc}(\zeta)\right)$$

s. t.

$$0 < \zeta < 1$$

$$X = f(X, U)$$

$$0 = g(X, U)$$

$$Z = h(X, U)$$

where:

J = cost function to optimize
$X = f(X, U)$ is corresponding to the system of differential equations for X states,
$0 = g(X, U)$ is corresponding to the system of algebraic constraints,
Z are the measurements of states and inputs (U).

**ANN Correction factor**

The obtained estimates were then used as output training data to fit a data-based model than predicts the correction factor using online measurements. As inputs to this model, the reboiler liquid density which is proportional to the polymer concentration, temperature and pressure were selected to include all possibly influencing factors. The data-based model was chosen to be a feedforward artificial neural network with one hidden layer, three hidden nodes and logistic sigmoid activation function in the hidden layer. The network was implemented and trained using the Python API of the Tensorflow deep learning library. The same neural network architecture was also implemented in CasADi, then the trained weights were extracted from Tensorflow and set as the CasADi network's weights.

$$\zeta = ANN(\rho_{reb}, T_{reb_{meas}}, P_{reb})$$

where:

$\rho_{reb}$ is the liquid density in reboiler,
$T_{measreb}$ is the measured liquid temperature in reboiler.

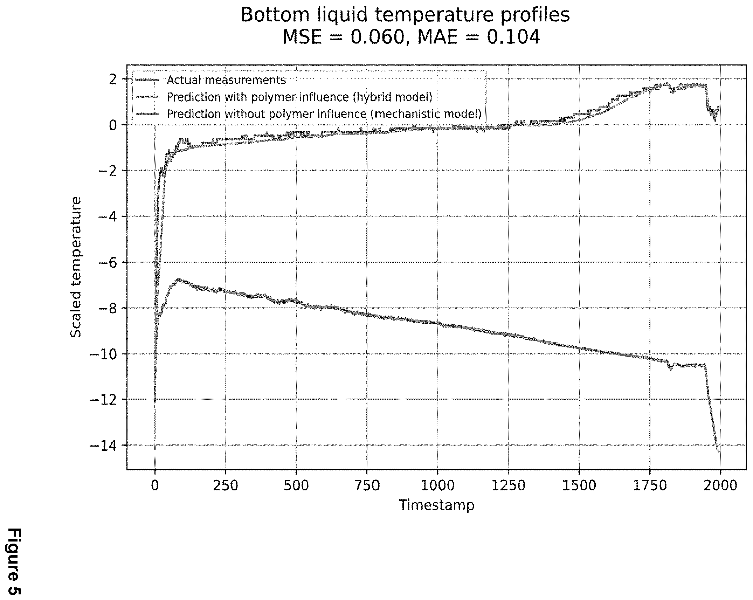

The obtained grey-box model predicts the reboiler temperature and other measured states with a satisfactory accuracy, as shown in Figure 5. However, due to the homogeneity of the used production time series, the model occasionally had numerical stability issues and it could not extrapolate to very different pressures as the pressure never changes significantly in the production data.

**Reboiler liquid temperature predictions:**

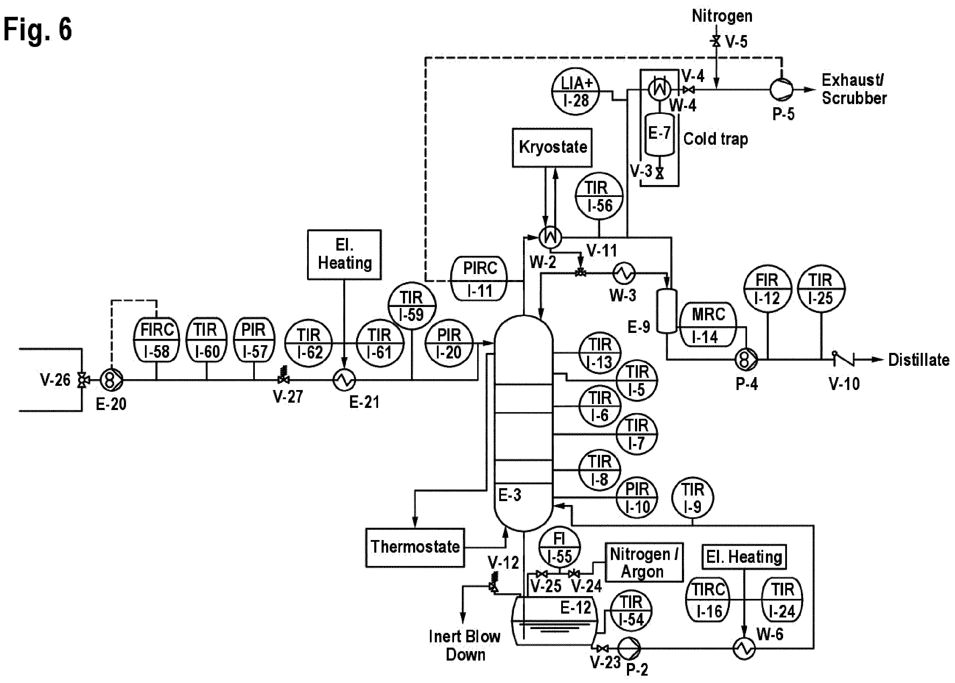

To remedy these issues, representative data must be generated to improve the model. Therefore, the distillation process was scaled down to the laboratory using a glass column, filled with CANNON ProPak unstructured stainless steel packing. The sketch of the laboratory setup is shown in Figure 6. The relevant parameters in the grey-box model were adjusted to match those of the laboratory-scale equipment.

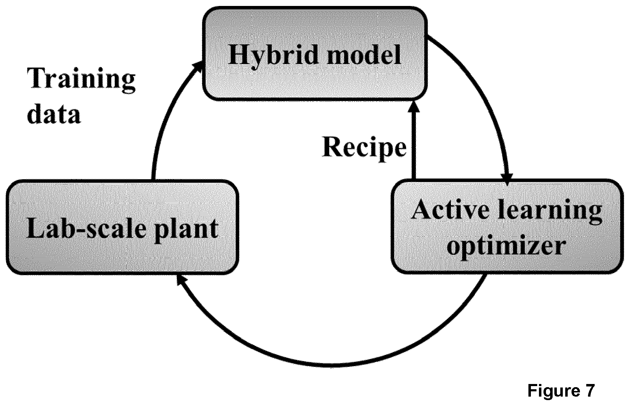

To generate a representative dataset, the feed flow rate, column pressure and reboiler heat input were varied using an active learning-based method. The aim of this is to ensure that all of the generated data contains valuable information for improving the neural network to maximize cost efficiency. The active learning approach is based on training an ensemble of data-based models on different subsets of the initially available training data. This ensemble is used together with an optimizer that maximizes the variance of the complete grey-box ensemble's predictions, designing a recipe where the three available inputs are varied. The obtained recipe is then implemented in the column to generate additional training data for the model. The ensemble is further trained with the extended dataset, and the process is repeated until the prediction variance of the ensemble decreases to a satisfactory level. The active learning process flow is illustrated in Figure 7. The implementation of this procedure was done using CasADi and the IPOPT optimizer.

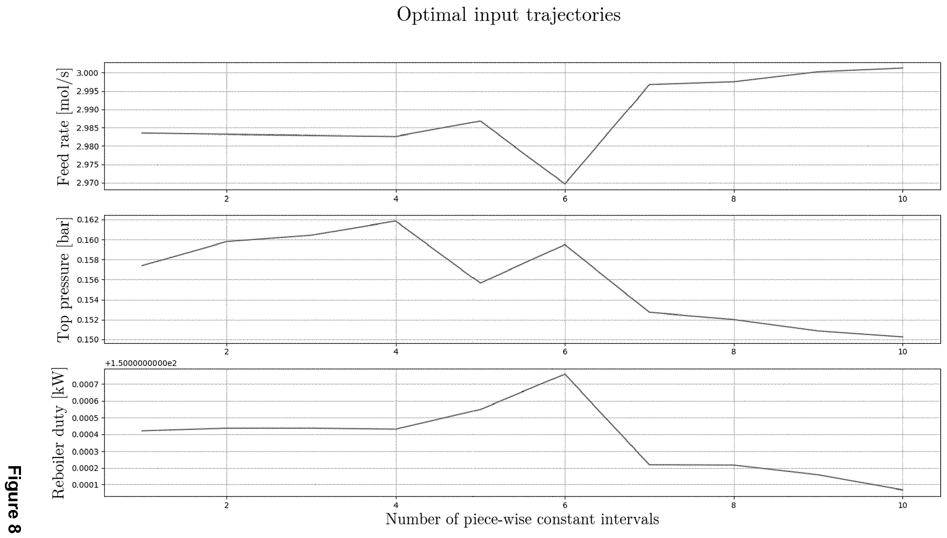

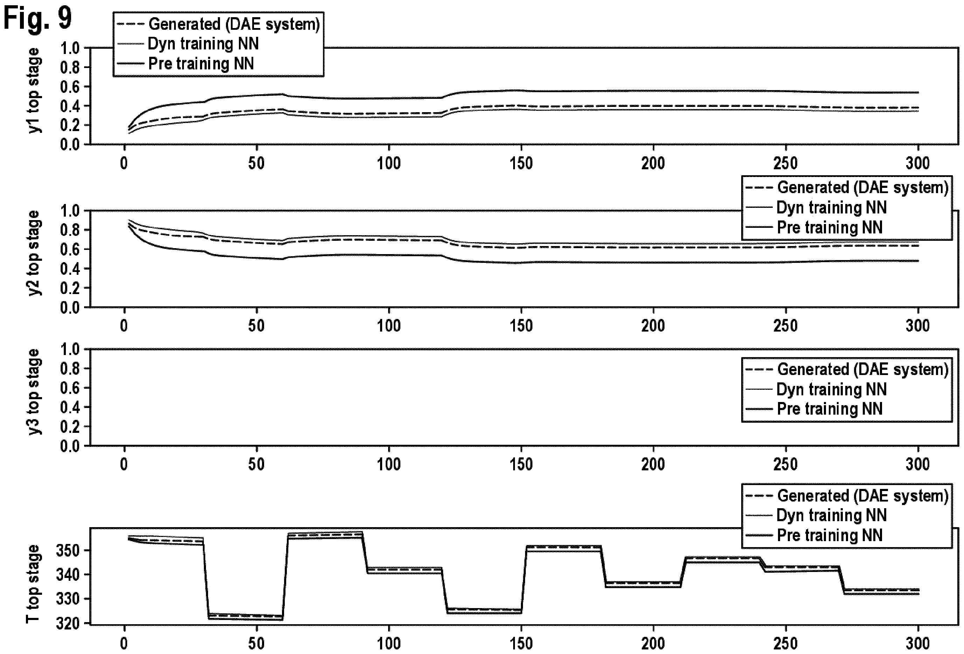

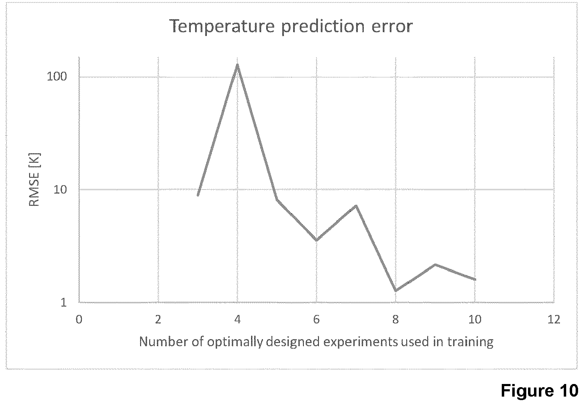

Figure 8 shows the optimized input trajectories that are expected to yield high model improvements. These input trajectories were implemented as an experimental recipe on the laboratory scale column to generate the training data. Figure 9 indicates the model predictions before (green color) and after (orange color) training on the generated data (blue color). The procedure was repeated multiple times before the grey-box model became sufficiently accurate. The improvement of the gray-box model is illustrated by the decreasing reboiler temperature prediction error throughout the experimental iterations in Figure 10.

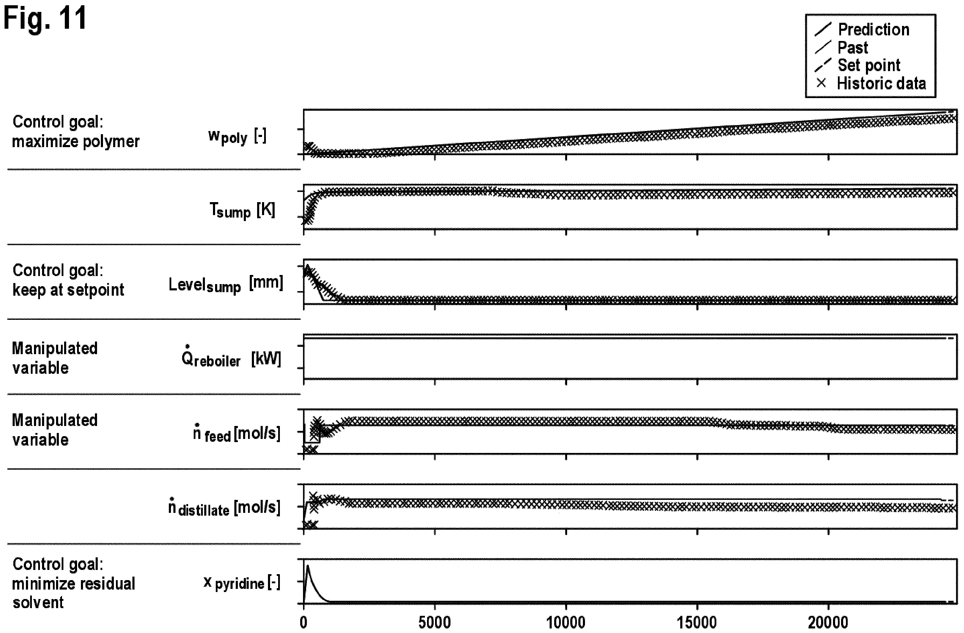

Next, the model was used to develop a model predictive controller for the laboratory setup. The implementation of the controller was done using the do-mpc open-source Python package that uses CasADi as its backend. The primary control goals of the controller are to minimize the residual solvent pyridine content in the reboiler at all times while maximizing the change in polymer concentration to accelerate the process. Figure 11 shows that the controller decreases the time needed to reach high polymer concentrations in the bottom of the column, thereby improving the space-time yield of the process. In the final step of the workflow, the model and the designed controller are scaled up to the production equipment and implemented in the process control system to reap the economical benefits of a shorter batch time.

**Claims**

1. A method to improve bio-/chemical and/or pharmaceutical production units in a production plant controlled by at least one computer the following steps comprising:

• Determining a grey-box model configuration wherein a data-based machine learning model component as part of the grey-box model describes a function which is independent of the production plant equipment scale and wherein the data-based machine learning model component is embedded into a system of ordinary differential equations or differential-algebraic equations which express the component mass and energy balances of the modeled process;

• Setting up the grey-box model via a software running on the at least one computer including the machine learning model component and a physical model component with the determined configuration and the dimensions of the required production scale of the production unit, and training its machine learning model component using available production history data;

• Setting up a downscaled laboratory version of the production unit operation, and scale the set up grey-box model to match it via its physical parameters;

• Perform experiments to generate representative data for extending the validity of the machine learning component of the grey-box model therefore improving it;

• Identifying at least one new operating window for the production unit using the improved grey-box model and numerical optimization techniques and validating the model-based control strategy with it; and

• Scaling up the grey-box model and the control strategy to the required production scale and performing validation runs.

2. A method according to claim 1, wherein
   for the model-based creation and optimization of new production processes, method steps 2 and 3 are combined so that the setting up of the grey-box model with the determined configuration is performed with the dimensions of laboratory-scale equipment, and the grey-box model is then trained by using any available data from previous trial experiments.

3. A method according to any of the previous claims, wherein
   the improvement of the chemical and/or biochemical production units is used to improve reactions of existing but obscure or completely new products, wherein lacking information regarding the kinetics of those reactions are provided via the grey-box model by calculating with the data-based machine learning model component reaction rates as a function of temperature, reactant concentrations and other factors.

4. A method according to claim 3, wherein
   the improved reaction is the modeling of polymerization reactions, wherein the possibly infinite number of unique species require the use of population balance equations in a grey-box formulation.

5. A method according to any of the previous claims, wherein
   the improvement of the chemical and/or biochemical production units is used to optimize a rectification process in form of a multi-stage distillation by calculating the required vapor-liquid equilibrium information by using a physical thermodynamical model component instead of the data-based machine learning model component.

6. A method according to any of the previous claims, wherein
   to approximate nonlinear functions with varying complexity, an artificial neural network is used for the data-based machine learning model component.

7. A method according to claim 6, wherein
   for training and simulating the grey-box models, which embed an artificial neural network into a system of ordinary differential equations, PyTorch and Tensorflow packages, provided in Python and any other programming language, are used, wherein to achieve the same when the physical model is differential-algebraic, CasADi package is used as the most suitable framework.

8. A method according to claim 7, wherein
   the physical and data-based model components are implemented within the same framework.

9. A method according to any of the previous claims, wherein
   both statistical design of experiments and model-based design methods to produce dynamic experiments with time-varying inputs are used to generate representative data for extending the validity of the machine learning component, resulting in training data with a much higher information density.

10. A system to perform chemical and/or biochemical production processes in a production plant comprising of the following components of all existing hardware plant equipment, a plant process control systems, a grey-box model comprising a data-based machine learning model component and/or a physical model component performed by a software, a database, at least one computer to operate the software, the database and the plant process control systems, wherein all system components are connected via a closed network structure and the system is configured to perform method according to the claims 1 to 9.

11. A computer program product comprising instructions, which when executed on one or more processors of a system to perform chemical and/or biochemical production processes in a production plant according to claim 10 causes the system to perform the method according to any one of claims 1 to 9.

12. A non-transitory computer-readable medium having stored thereon computer-executable instructions which, when executed on one or more processors of a system according to claim 10, causes the system to perform the method according to claim 1 to 9.

Find scale-independent embedded grey-box model configuration for specific unit operation

Implement model and train it with production data

Replicate process in lab scale, adjust physical parameters of the grey-box model

Scale model and control strategy to production, perform validation

Design and perform experiments to generate representative dynamic data

Identify new operating windows, validate model-based control strategy

**Figure 1**

# Fig. 2

F : Feed molar flow
$L_i$ : Liquid molar flow from Stage i
$V_i$ : Vapor molar flow from Stage i
Q : Heat duty to reboiler

Figure 3

# Fig. 4

**Figure 5**

Fig. 6

Figure 7

Figure 8

# Fig. 9

Figure 10

Fig. 11

Europäisches
Patentamt

European
Patent Office

Office européen
des brevets

**EUROPEAN SEARCH REPORT**

Application Number

**EP 23 16 9680**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/267723 A1 (HEARN STEPHEN [IE] ET AL) 1 December 2005 (2005-12-01) * abstract; figure 4 * * paragraph [0140] - paragraph [0171] * * paragraph [0091] - paragraph [0096] * | 1-12 | INV. G05B17/02 G05B19/418 G05B13/04 |
| X | US 2012/003623 A1 (BARTEE JAMES [US] ET AL) 5 January 2012 (2012-01-05) * paragraph [0073] - paragraph [0083] * | 1-12 | |
| X | US 2020/379442 A1 (CHAN WILLIE K C [US] ET AL) 3 December 2020 (2020-12-03) * paragraph [0004] - paragraph [0020] * | 1-12 | |
| | | | TECHNICAL FIELDS SEARCHED (IPC) |
| | | | G05B |

The present search report has been drawn up for all claims

| Place of search | Date of completion of the search | Examiner |
|---|---|---|
| Munich | 6 September 2023 | Martin Bueno, Teresa |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&  : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 16 9680

This annex lists the patent family members relating to the patent documents cited in the above-mentioned European search report.
The members are as contained in the European Patent Office EDP file on
The European Patent Office is in no way liable for these particulars which are merely given for the purpose of information.

06-09-2023

| Patent document cited in search report | | Publication date | Patent family member(s) | | Publication date |
|---|---|---|---|---|---|
| US 2005267723 | A1 | 01-12-2005 | AU 2003212615 | A1 | 30-09-2004 |
| | | | GB 2412992 | A | 12-10-2005 |
| | | | US 2005267723 | A1 | 01-12-2005 |
| | | | WO 2004081680 | A1 | 23-09-2004 |
| US 2012003623 | A1 | 05-01-2012 | NONE | | |
| US 2020379442 | A1 | 03-12-2020 | EP 3966641 | A1 | 16-03-2022 |
| | | | JP 2022532143 | A | 13-07-2022 |
| | | | US 2020379442 | A1 | 03-12-2020 |
| | | | WO 2020227383 | A1 | 12-11-2020 |

EPO FORM P0459

For more details about this annex : see Official Journal of the European Patent Office, No. 12/82